# EUROPEAN PATENT APPLICATION

(11) **EP 4 578 825 A1**
(43) Date of publication of application: **02.07.2025**
(21) Application number: 23907872.8
(22) Date of filing: 22.12.2023
(51) Int. Cl.: C01B 32/05, H01M 4/587, H01M 4/36, H01M 4/133, H01M 10/0562, H01M 10/0525, H01M 4/02

(54) **POROUS CARBON-AG COMPOSITE, ANODE CONTAINING SAME, AND LITHIUM ION SECONDARY BATTERY INCLUDING SAME ANODE**

(30) Priority: 23.12.2022 KR 20220183018
(71) Applicant: LG Energy Solution, Ltd., Seoul 07335 (KR)
(72) Inventor: KIM, Taegon, Daejeon 34122 (KR); LEE, Choonghyeon, Daejeon 34122 (KR); SONG, Min Sang, Daejeon 34122 (KR)
(74) Representative: Goddar, Heinz J.
(86) International application number: PCT/KR2023/021433
(87) International publication number: WO 2024/136589

(57) **Abstract**

The present invention provides a porous carbon-Ag composite comprising macro porous carbon particles and Ag particles inserted into pores of the carbon, a negative electrode comprising the composite, and a lithium-ion secondary battery comprising the negative electrode.

## Description

### [Technical Field]

The present application claims the benefit and priority to Korean Patent Application No. 10-2022-0183018, filed December 23, 2022, and Korean Patent Application No. 10-2023-0189414, filed December 22, 2023, the disclosure of which is incorporated herein by reference in its entirety.

The present invention relates to a porous carbon-Ag composite, a negative electrode comprising the same, and a lithium-ion secondary battery comprising the negative electrode.

### [Related Art]

Recently, all-solid-state secondary batteries utilizing solid electrolytes as electrolytes are drawing attention. To improve the energy density of these all-solid-state secondary batteries, the use of lithium as a negative electrode active material has been proposed. The capacity density (capacity per unit weight) of lithium is about 10 times that of graphite, which is commonly used as a negative electrode active material. Therefore, by using lithium as a negative electrode active material, it is possible to increase the power output while thinning the all-solid-state secondary battery.

All-solid-state lithium-ion secondary batteries are known, for example, anodeless lithium-ion secondary batteries comprising a negative electrode active material layer comprising a metal forming an alloy with lithium and a carbon material.

The anodeless lithium-ion secondary battery as described above is driven by a mechanism in which metallic lithium is precipitated from the negative electrode active layer and between the negative electrode active layer and the current collector during charging, and the metallic lithium is ionized and moved toward the positive electrode during discharging.

However, the prior art as described above still has many areas to be improved due to problems such as the occurrence of dendrites as a precipitation form of metallic lithium precipitated between the negative electrode active material layer and the current collector during charging and voids that occur when the metallic lithium is dissolved during discharging.

### [Prior Art Reference]

### [Non-Patent Literature]

Yong-Gun Lee et al. High-energy long-cycling all-solid-state lithium metal batteries enabled by silver-carbon composite anodes, Nature Energy, 5, 299 (2020).

### [Detailed Description of the Invention]

### [Technical Problem]

The present invention aims to provide a porous carbon-Ag composite that improves the dispersibility of Ag particles, prevents agglomeration of Ag particles, thereby improving the application efficiency of Ag particles, and performs an excellent mechanical buffering function against thickness changes due to shrinkage/expansion during charge/discharge in a lithium precipitating negative electrode.

It is also an object to provide a negative electrode comprising the porous carbon-Ag composite, which improves the charge and discharge efficiency and lifetime characteristics of the battery, and a lithium-ion secondary battery.

### [Technical Solution]

To accomplish the above objective, the present invention provides a porous carbon-Ag composite comprising macro porous carbon particles and Ag particles inserted into pores of the carbon.

Furthermore, the present invention provides a negative electrode that includes a current collector and a negative electrode active material layer, wherein the negative electrode active material layer comprises the porous carbon-Ag composite.

Furthermore, the present invention provides a lithium-ion secondary battery including a positive electrode, a negative electrode, and a solid electrolyte disposed between the positive electrode and negative electrode.

### [Advantageous Effects]

The porous carbon-Ag composite of the present invention improves the dispersibility of Ag particles and prevents agglomeration of Ag particles, thereby improving the application efficiency of Ag particles, as Ag particles are well fixed in the surface pores of macro porous carbon.

In addition, since lithium precipitating negative electrodes are subject to severe thickness changes due to shrinkage/expansion during charge and discharge, and the pores of the macro porous carbon act as a mechanical buffer against these thickness changes, the porous carbon-Ag composite of the present invention improves the charge/discharge efficiency and lifetime characteristics of the battery.

The negative electrode and the lithium-ion secondary battery of the present invention comprise the porous carbon-Ag composite, thereby providing an effect of improving the charge and discharge efficiency and lifetime characteristics of the battery.

### [Brief Description of Drawing]

FIG. 1 is a schematic illustration of the structure of the lithium-ion secondary battery of the present invention compared to a conventional battery structure.
FIG. 2 is SEM images depicting the form of the macro porous carbon used in the present invention and the form of the porous carbon-Ag composite.
FIG. 3 is SEM images of micro porous carbon (activated carbon), and non-porous carbon (carbon black) used in the prior art.

### [Best Mode for Practicing the Invention]

Hereinafter, the present invention is described in more detail to facilitate an understanding of the present invention.

The terms and words used in this specification and claims are not to be construed in their ordinary or dictionary sense, but rather in a sense and concept consistent with the technical idea of the present invention, based on the principle that the inventor(s) may properly define the concept of a term to best describe his/her invention. Further, the terms used in this specification are used to describe exemplary embodiments only and are not intended to limit the present invention. The singular expression includes the plural expression unless the context clearly indicates otherwise.

When a component is referred to as being "connected to, provided with, or installed on" another component, it should be understood that it may be directly connected to or installed on that component, but there may be other components therebetween. On the other hand, when a component is referred to as being "directly connected to or installed on" another component, it should be understood that there is no other component therebetween. Other expressions that describe relationships between components, such as "on top of" and "directly on top of", "between" and "directly between", or "adjacent to" and "directly adjacent to", should be interpreted similarly.

As used herein, the term "combination" includes mixtures, alloys, and reaction products, unless otherwise noted.

The porous carbon-Ag composite of the present invention is characterized in that it comprises macro porous carbon particles and Ag particles inserted into the pores of the carbon.

The porous carbon-Ag composite improves the dispersibility of Ag particles since Ag particles are well fixed in the surface pores of the macro porous carbon, and prevents agglomeration of Ag particles, thereby improving the application efficiency of Ag particles. In particular, in the case of lithium precipitating negative electrodes, thickness changes due to shrinkage/expansion during charge/discharge are severe, and the pores of the macro porous carbon act as a mechanical buffer against such thickness changes, thereby improving the charge/discharge efficiency and lifetime characteristics of the battery.

In one embodiment of the present invention, the macro porous carbon particles may comprise pores having a size of 60 nm to 0.5 µm on their surface, and the Ag particle size (D50) may be 20 nm to 100 nm.

If the pores present on the surface of the macro porous carbon particles are composed only of pores with a size of less than 60 nm, it is difficult to achieve the effect of improving the dispersibility of Ag by using macro porous carbon particles, and if the macro porous carbon particles contain pores that are too large, it may be difficult for these Ag particles to perform because the Ag particles are heavily inserted into the internal pores of the macro porous carbon.

The macro porous carbon particles may also include pores having a size of less than 60 nm, for example, pores having a size of less than 10 nm to 60 nm, and may also include pores having a size of 100 nm to 1 µm.

Furthermore, when the particle size (D50) of the Ag is less than 20 nm, it is undesirable because the Ag particles are heavily inserted into the internal pores of the macro porous carbon, and when the size of the Ag particles exceeds 100 nm, it is undesirable because the effects of forming a lithium alloy by the Ag particles, inducing intercalation of lithium ions, and reducing the lithium precipitation energy may be reduced. The Ag particle size (D50) is preferably 30 nm to 60 nm, and may be even more preferably 40 nm to 60 nm.

The pore size present on the surface of the macro porous carbon particles can be measured by BET measurement by nitrogen gas absorption/desorption and statistical image analysis method by SEM analysis, and the Ag particle size can be measured by statistical image analysis method by SEM analysis.

In one embodiment of the present invention, the macro porous carbon particles with a size (D50) of 0.5 µm to 10 µm, more preferably of 0.7 µm to 5 µm, may be used.

When the macro porous carbon particle size (D50) is less than 0.5 µm, the binder application content rapidly increases, which is undesirable because it increases the electrode resistance, and when it exceeds 10 µm, it is undesirable because the application efficiency for Ag carrier is reduced.

The macro porous carbon particle size (D50) can be measured by a particle size analysis method by laser diffraction.

In one embodiment of the present invention, the macro porous carbon particles may have a BET specific surface area of 300 to 1000 m²/g, more preferably 400 to 600 m²/g.

If the BET specific surface area is less than 300 m²/g, it is undesirable because the dispersion effect on Ag particles is reduced, and if it exceeds 1000 m²/g, it is undesirable because the structure is easily disintegrated during the pressure application process for all-solid-state battery construction, and it is difficult to maintain the porous macropore characteristic.

In one embodiment of the present invention, the macro porous carbon particles may have a bulk density of 0.1 to 1 g/ml, preferably 0.1 to 0.5 g/ml, more preferably 0.1 to 0.3 g/ml.

When the bulk density is less than 0.1 g/ml, the pore structure is highly developed, and the structure easily collapses during the pressure application process for all-solid-state battery construction, and it is undesirable because it is difficult to maintain the porous macropore characteristic. When the bulk density exceeds 1 g/ml, it is a dense carbon structure with an inadequately developed pore structure, and it is undesirable because the dispersion effect on Ag particles are greatly reduced.

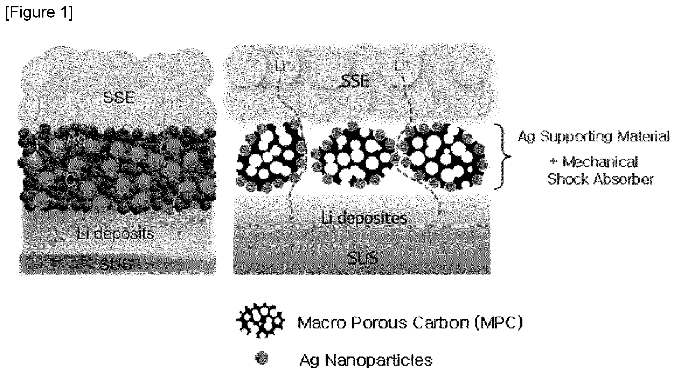

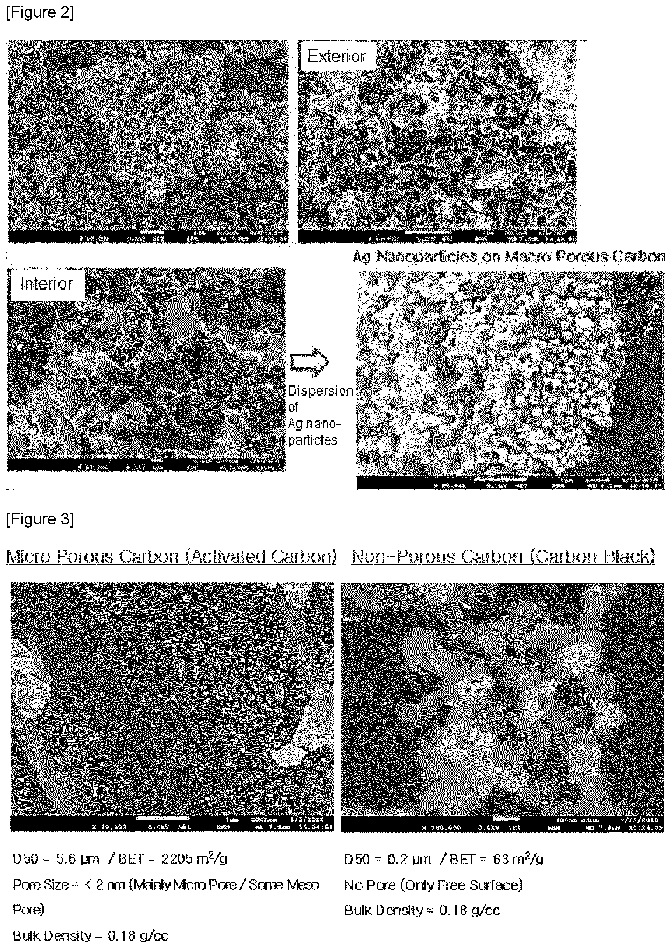

In one embodiment of the present invention, the bulk density of the macro porous carbon-Ag composite may be 0.12 to 0.3 g/ml, 0.15 to 0.3 g/ml, 0.2 to 0.3 g/ml, 0.15 to 0.25 g/ml, or 0.2 to 0.25 g/ml. When the bulk density is in the above-described range, as shown in FIGs. 1 and 2, an amount of the Ag particles that are inserted into the pores inside the macro porous carbon particles is reduced, and a large amount is fixed in the pores on the surface of the macro porous carbon particles, which can improve the utilization efficiency of the Ag particles, and the porosity of the macro porous carbon particles can be maintained, which is desirable.

Furthermore, when the bulk density of the porous carbon-Ag composite is less than 0.12 g/ml, the efficiency of the application of Ag nanoparticles is reduced, which is undesirable because the initial charge/discharge efficiency and the battery efficiency are lowered, and when it exceeds 0.3 g/ml, the internal porosity of the macro porous carbon particles is reduced, and the efficiency of the Ag particles contained in the interior of the macro porous carbon particles is also very low. Therefore, it has the disadvantage of lowering the initial charge/discharge efficiency and the battery efficiency, as confirmed in Experimental Example 2.

In one embodiment of the present invention, the porous carbon-Ag composite may comprise 70 to 90 parts by weight of macro porous carbon particles and 10 to 30 parts by weight of Ag particles, based on the total weight of the composite, and more preferably may comprise 80 to 90 parts by weight of macro porous carbon particles and 10 to 20 parts by weight of Ag particles.

When the content ratio of macro porous carbon particles to Ag particles meets the above-described range, it is desirable because the charge/discharge efficiency and lifetime characteristics are improved.

In one embodiment of the present invention, the porous carbon-Ag composite may further comprise 3 to 10 parts by weight of binder, based on the total weight of the composite. For example, a binder dissolved in a solvent with the macro porous carbon and Ag particles may be used in the wet preparation of the porous carbon-Ag composite, in which case the porous carbon-Ag composite may include the binder. When the binder is included, the content of the macro porous carbon particles described above may be reduced by the content of the binder included.

In one embodiment of the present invention, the porous carbon-Ag composite may further comprise particles forming an alloy with lithium in addition to Ag. The metal particles may be one or more particles selected from gold, platinum, palladium, silicon, aluminum, bismuth, tin, indium, and zinc.

The present invention includes a current collector and a negative electrode active material layer, wherein the negative electrode active material layer provides a negative electrode comprising the porous carbon-Ag composite.

In one embodiment of the present invention, the negative electrode active material layer may comprise, based on the total weight of the layer, 80 to 99% by weight of the porous carbon-Ag composite and 1 to 20% by weight of binder, preferably 85 to 99% by weight of the porous carbon-Ag composite and 1 to 15% by weight of binder, more preferably 90 to 99% by weight of the porous carbon-Ag composite and 1 to 10% by weight of binder.

When the content ratio of the negative electrode active material layer meets the above-described range, it is desirable because the charge and discharge efficiency and lifetime characteristics are improved.

Furthermore, the present invention includes a current collector and a negative electrode active material layer, wherein the negative electrode active material layer may comprise 50 to 98% by weight of macro porous carbon, 1 to 30% by weight of Ag particles, and 1 to 20% by weight of binder, based on the total weight of the layer. Further, the negative electrode active layer may comprise 70 to 98% by weight of macro porous carbon, 1 to 20% by weight of Ag particles, and 1 to 10% by weight of binder, based on the total weight of the layer.

When the content ratio of the negative electrode active material layer meets the above-described range, it is desirable because the charge and discharge efficiency and lifetime characteristics are improved.

The present invention provides a lithium-ion secondary battery including a positive electrode, a negative electrode of the present invention, and a solid electrolyte disposed between the negative electrode and positive electrode.

The lithium-ion secondary battery provides improved driving characteristics by including the negative electrode active material layer of the present invention.

In one embodiment of the present invention, the solid electrolyte may be a sulfide-based solid electrolyte.

In one embodiment of the present invention, the lithium-ion secondary battery may be an anodeless battery. The anodeless battery is a battery in which a lithium precipitation layer is formed between the negative electrode active material layer and the current collector upon initial charging.

Hereinafter, embodiments of the present invention are described in more detail.

### <Composition of a lithium-ion secondary battery>

A lithium ion rechargeable battery according to one embodiment of the present invention is a so-called all-solid-state lithium ion rechargeable battery that charges and discharges by transferring lithium ions between a positive electrode and a negative electrode. Specifically, this all-solid-state lithium-ion secondary battery comprises a positive electrode, a negative electrode, and a solid electrolyte layer disposed between the positive electrode and the negative electrode.

### (1) Positive electrode

In the present invention, the positive electrode includes a positive electrode current collector and a positive electrode active material layer disposed in sequence toward the negative electrode.

The positive electrode current collector may be plate-like or foil-like. The positive electrode current collector may be one metal or an alloy of two or more metals selected from, for example, indium, copper, magnesium, stainless steel, titanium, iron, cobalt, nickel, zinc, aluminum, germanium, and lithium. Furthermore, the positive electrode current collector may comprise a carbon-based conductive material and a binder, and may further comprise a primer layer coated on a surface of the positive electrode current collector. In this case, the adhesion and electrical conductivity between the positive electrode active material layer and the current collector can be greatly improved.

The positive electrode active material layer may reversibly adsorb and release lithium ions. The positive electrode active material layer may comprise a positive electrode active material and a solid electrolyte.

The positive electrode active material may be a compound in which lithium can be inserted/deleted. Examples of compounds in which lithium can be inserted or removed include LiₐA_{1-b}B'_{b}D'₂ (wherein 0.90≤a≤1.8, and 0≤b≤0.5); LiₐE₁-_{b}B'_{b}O_{2-c}D'_{c} (wherein 0.90≤a≤1.8, 0≤b≤0.5, and 0≤c≤0.05); LiE_{2-b}B'_{b}O_{4-c}D'_{c} (wherein 0≤b≤0.5, and 0≤c≤0.05); LiₐNi_{1-b-c}Co_{b}B'_{c}D'_{α} (wherein 0.90≤a≤1.8, 0≤b≤0.5, 0≤c≤0.05, and 0<α≤2); LiₐNi_{1-b-c}Co_{b}B'_{c}O_{2-α}F'_{α} (wherein 0.90≤a≤1.8, 0≤b≤0.5, 0≤c≤0.05, and 0<α<2); LiₐNi_{1-b-c}Mn_{b}B'_{c}D'_{α} (wherein 0.90≤a≤1.8, 0≤b≤0.5, 0≤c≤0.05, and 0<α≤2 ); LiₐNi_{1-b-c}Mn_{b}B'_{c}O_{2-α}F'_{α} (wherein 0.90≤a≤1.8, 0≤b≤0.5, 0≤c≤0.05, and 0<α<2 ); LiₐNi_{b}E_{c}G_{d}O₂ (wherein 0.90≤a≤1.8, 0≤b≤0.9, 0≤c≤0.5, and 0.001≤d≤ 0.1); LiₐNi_{b}Co_{c}Mn_{d}GₑO₂ (wherein 0.90≤a≤1.8, 0≤b≤0.9, 0≤c≤0.5, 0≤d≤0.5, and 0.001≤e≤0.1); LiₐNiG_{b}O₂ (wherein 0.90≤a≤1.8, and 0.001≤b≤0.1); LiₐCoG_{b}O₂ (wherein 0.90≤a≤1.8, and 0.001≤b≤0.1); LiₐMnG_{b}O₂ (wherein 0.90≤a≤1.8, and 0.001≤b≤0.1); LiₐMn₂G_{b}O₄ (wherein 0.90≤a≤1.8, and 0.001≤b≤0.1); QO₂; QS₂; LiQS₂; V₂O₅; LiV₂O₅; Lil'O₂; LiNiVO₄; Li_{(3-f)}J₂(PO₄)₃ (wherein 0≤f≤2); Li_{(3-f)}Fe₂(PO₄)₃ (wherein 0≤f≤2); and LifetimePO₄.

In the above formulae, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

Specific examples of the positive electrode active materials include lithium cobaltate (hereinafter, referred to as LCO), lithium nickelate, lithium nickel cobaltate, lithium nickel cobalt aluminumate (hereinafter, referred to as NCA), lithium cobalt manganate (hereinafter, referred to as NCM), lithium salts such as lithium manganate and lithium iron phosphate, and lithium sulfide. The positive electrode active material layer may comprise only one, or two or more selected from these compounds as the positive electrode active material.

The positive electrode active material may comprise a lithium salt of a transition metal oxide having a layered rock salt structure among the lithium salts described above. Here, "layered rock salt structure" means a structure in which layers of oxygen atoms and layers of metal atoms are arranged alternately and regularly in the direction of a cubic rock salt structure, resulting in each layer of atoms forming a two-dimensional plane. Also, "cubic rock salt structure" means a sodium chloride-type structure, which is one type of crystal structure. For example, "cubic rock salt structure" refers to a structure in which the face-centered cubic lattices formed by cations and anions are arranged so that they are offset from each other by 1/2 of the corners of the unit lattice.

The lithium salt of the transition metal oxide having such a layered rock salt-type structure may be, for example, a ternary lithium transition metal oxide such as LiNiₓCo_{y}Al_{z}O₂(NCA) or LiNiₓCo_{y}Mn_{z}O₂(NCM) (wherein 0 < x < 1, 0 < y < 1, 0 < z < 1, and x + y + z = 1). The positive electrode active material layer (14) may include a lithium salt of a ternary transition metal oxide having such a layered rock salt-like structure as a positive electrode active material to improve the energy density and thermal stability of the all-solid-state Lithium-ion secondary battery (100).

The shape of the positive electrode active material may be, for example, a particle shape such as a spherical shape, an ellipsoidal shape, or the like. Furthermore, the particle diameter of the positive electrode active material is not particularly limited and can be in the range applicable to positive electrode active materials of conventional all-solid-state lithium-ion secondary batteries. Furthermore, the content of the positive electrode active material in the positive electrode active material layer is not particularly limited and can be within the range applicable to positive electrodes of conventional all-solid-state lithium-ion secondary batteries.

Of course, the surface of the compound can also have a coating layer, or a mixture of the compound and a compound having a coating layer. This coating layer may comprise a coating element compound of oxide or hydroxide of a coating element, oxyhydroxide of a coating element, oxycarbonate of a coating element, or hydroxycarbonate of a coating element. The compounds forming this coating layer may be amorphous or crystalline. The coating elements included in the coating layer may include Mg, Al, Co, Mn, Ni, Cu, Fe, P, K, Na, Ca, Si, Ti, Ru, Nb, W, V, Mo, Sn, Zn, Ge, Ga, B, As, Zr, or mixtures thereof. The coating layer formation process can be carried out by any coating method (e.g., spray coating, immersion method, etc.), provided that the compound can be coated with these elements in a way that does not adversely affect the properties of the positive electrode active material. This process is well understood by those skilled in the art and is therefore omitted herein.

Specific examples of the above coating layer include Li₂O-ZrO₂.

The solid electrolyte included in the positive electrode active material layer may be the same as or different from the solid electrolyte included in the solid electrolyte layer described below.

In addition, the positive electrode active material layer may comprise any suitable combination of additives such as, for example, conductive agents, binders (binding agents), fillers, dispersants, or ionic conductivity aids, as well as the above-described positive electrode active material and solid electrolyte.

The conductive agent may include, for example, graphite, carbon black, acetylene black, Ketjen black, single- or multi-walled carbon nanotubes, carbon fibers, carbon nanofibers, or metal powders. The binder (binding agent) may also include, for example, styrene butadiene rubber (SBR), polytetrafluoroethylene, polyvinylidene fluoride, or polyethylene. In addition, the filler, dispersant, or ionic conductivity aid may be any of the materials typically used for the electrodes of all-solid-state lithium-ion secondary batteries.

### (2) Negative electrode

In the present invention, the negative electrode may include a negative electrode current collector and a negative electrode active material layer disposed in turn toward the positive electrode.

The negative electrode current collector may be plate-like or foil-like. The negative electrode current collector may comprise a material that does not react with lithium, that is, does not form any of the alloys and compounds with lithium. Materials consisting of the negative electrode current collector include, for example, copper, stainless steel, titanium, iron, cobalt, and nickel. The negative electrode current collector may be composed of one of these metals, or may be composed of an alloy of two or more metals or a clad material.

The negative electrode active layer may not contain lithium in the negative electrode current collector, the negative electrode active layer, or between the negative electrode active layer and the solid electrolyte layer in an initial state or in a state after a full discharge. As described below, overcharging of an all-solid-state lithium-ion secondary battery according to one embodiment may cause the negative electrode active material contained in the negative electrode active material layer and the lithium ions migrated from the positive electrode to form an alloy or compound, and a metal layer with lithium as the main component may be formed (precipitated) on the negative electrode. The metal layer may be precipitated and disposed between the negative electrode current collector and the negative electrode active material layer, inside the negative electrode active material layer, or both of them. Between the negative electrode current collector and the negative electrode active material layer, the lithium-based metal layer may be disposed closer to the negative electrode current collector layer than to the negative electrode active material layer.

The negative electrode active material layer of the present invention includes Ag as the negative electrode active material. Thus, the metal layer formed upon overcharge may comprise a Li(Ag) alloy including a γ1 phase, a βLi phase, or a combination thereof, in which Ag is employed in the lithium. Therefore, during discharge, only Li is dissolved in the Li(Ag) alloy which consists of the metal layer, and the employed Ag is retained to inhibit the development of voids. In this case, the content of Ag in the precipitated Li-Ag solid solution may be 60% by weight or less. In this range, the degradation of the average discharge potential due to the influence of Ag can be effectively suppressed. On the other hand, if the content of Ag in the precipitated Li-Ag solid solution is too low, the amount of Ag remaining at the time of discharge would be small, and the occurrence of voids may not be sufficiently suppressed. For this reason, the content of Ag in the precipitated Li-Ag solid solution may be greater than 20% by weight, such as greater than 40% by weight.

If the content of Ag contained in the negative electrode active layer is too small, it may not be possible to suppress the occurrence of voids because the amount of Ag remaining upon discharge is also reduced. For this reason, the negative electrode active layer may comprise at least 10% by weight, such as at least 20% by weight, of Ag, based on 100% by weight of the total negative electrode active material contained in the negative electrode active layer, in an initial state without charge and discharge.

The negative electrode active material layer further comprises macro porous carbon as a negative electrode active material other than the Ag. In addition, it may further comprise at least one selected from Au, Pt, Pd, Si, Al, Bi, Sn, In and Zn, in addition to the Ag.

The negative electrode active layer may further comprise a binder (binding agent). By including a binder (binding agent), the negative electrode active layer can be stabilized on the negative electrode current collector. Materials consisting of the binder (binding agent) include, for example, resins such as styrene butadiene rubber (SBR), polytetrafluoroethylene, polyvinylidene fluoride, and polyethylene. The binder (binding agent) may comprise one or more selected from these resin materials.

The negative electrode active material layer may also be suitably formulated with additives used in conventional all-solid-state lithium-ion secondary batteries, such as fillers, dispersants, ionic conductors, and the like. Specific examples of such additives are as described above for the positive electrode.

The overall thickness of the negative electrode active material layer is not particularly limited, but may be 1 µm to 100 µm, or 10 µm to 60 µm. If the thickness of the negative electrode active material layer is less than 1 µm, the performance of the all-solid-state secondary battery may not be sufficiently improved. If the thickness of the negative electrode active material layer exceeds 100 µm, the resistance of the negative electrode active material layer may be high, and consequently, the performance of the all-solid-state secondary battery may not be sufficiently improved. By using the binder described above, the thickness of the negative electrode active material layer can be easily secured at an appropriate level.

Meanwhile, the negative electrode current collector may further comprise a film comprising a material capable of forming an alloy or compound with lithium, wherein the film may be disposed between the negative electrode current collector and the negative electrode active material layer.

The negative electrode current collector does not react with lithium metal, but may make it difficult to precipitate a smooth layer of lithium metal on top. The film may also be used as a wetting layer to allow the lithium metal to precipitate smoothly on top of the negative electrode current collector.

Materials capable of forming an alloy with the lithium metal used in the film may include silicon, magnesium, aluminum, lead, silver, tin, or combinations thereof. Materials capable of forming a compound with the lithium metal used in the film may include carbon, titanium sulfide, iron sulfide, or combinations thereof. The content of the material used in the film may be in small amounts without affecting the electrochemical properties of the electrode and/or the redox potential of the electrode. The film may be applied flatly on the negative electrode current collector to prevent cracking during the charging cycle of the all-solid-state lithium-ion secondary battery. The application of the film may be carried out by physical deposition, such as evaporation or sputtering, chemical deposition, or plating.

The thickness of the film may be 1 nm to 500 nm. The thickness of the film may be, for example, 2 nm to 400 nm. The thickness of the film may be, for example, 3 nm to 300 nm. The thickness of the film may be, for example, 4 nm to 200 nm. The thickness of the film may be, for example, 5 nm to 100 nm.

### (3) Solid electrolyte layer

In the present invention, the solid electrolyte layer is disposed between a positive electrode and a negative electrode (e.g., between a positive electrode active material layer and a negative electrode active material layer). The solid electrolyte layer comprises a solid electrolyte capable of moving ions. The solid electrolyte layer may comprise a sulfide-based solid electrolyte.

The sulfide-based solid electrolyte may include Li₂S-P₂S₅, Li₂S-P₂S₅-LiX (wherein X is a halogen atom), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is any one of Ge, Zn and Ga), Li₂S-GeS₂, Li₂S-SiS₂-Li₃PO₄, Li₂S-SiS₂-LiₚMO_{q} (wherein p and q are positive numbers, and M is any one of P, Si, Ge, B, Al, Ga and In), or combinations thereof. The solid electrolyte may comprise one material, or two or more materials selected from these sulfide-based solid electrolyte materials.

The sulfide-based solid electrolyte may include a solid electrolyte represented by Formula 1 below:

<Formula 1> LiₓM_{'y}PS_{z}A_{w},

wherein x, y, z, and w are independently greater than or equal to 0 and less than or equal to 6;
M' is at least one of As, Ge, Ga, Sb, Si, Sn, Al, In, Ti, V, Nb, and Ta;
A is at least one of F, Cl, Br, and I.

As the solid electrolyte, it is possible to utilize sulfide solid electrolyte materials comprising sulfur (S), phosphorus (P), and lithium (Li) as components. For example, a material including Li₂S-P₂S₅ can be utilized. When utilizing a material comprising Li₂S-P₂S₅ as a sulfide-based solid electrolyte material, the mixed molar ratio of Li₂S to P₂S₅ may be selected in the range of, for example, Li₂S:P₂S₅ = 50:50 to 90:10.

Solid electrolyte can also be amorphous or crystalline. It can also be a mixture of amorphous and crystalline.

The solid electrolyte layer may further comprise a binder (binding agent). Such binder (binding agent) materials include, for example, resin and acrylic-based binders such as styrene-butadiene rubber (SBR), styrene-butadiene-styrene block copolymer (SBS), nitrile-butadiene rubber (NBR), fluorinated rubber, polytetrafluoroethylene, polyvinylidene fluoride, polyethylene, or polyacrylic acid. The binder (binding agent) material may be the same as or different from the material constituting the binder (binding agent) in the positive electrode active layer and the negative electrode active layer.

### (4) Composition of an all-solid-state lithium-ion secondary battery

The all-solid-state lithium-ion secondary battery of the present invention may be an all-solid-state lithium-ion secondary battery comprising a positive electrode, a solid electrolyte layer, and a negative electrode as described above, in that order.

### <Method of manufacturing an all-solid-state lithium-ion secondary battery>

Next, a manufacturing method of the above all-solid-state lithium-ion secondary battery is described. The all-solid-state lithium-ion secondary battery according to one embodiment can be obtained by fabricating a positive electrode, a negative electrode, and a solid electrolyte layer, respectively, and then stacking the above layers.

### (1) Positive electrode manufacturing process

The positive electrode fabrication process is described as follows. First, the materials constituting the positive electrode active layer (positive electrode active material, binder (binding agent), etc.) are added to a non-polar solvent to form a slurry (or a paste). The obtained slurry is then applied to the prepared positive electrode current collector. This is dried to obtain a laminate. The laminate is then pressurized, for example using hydrostatic pressure, to obtain the positive electrode. In this case, the pressurization process is omitted.

### (2) Negative electrode manufacturing process

The negative electrode fabrication process is described as follows. First, the materials constituting the negative electrode active material layer (macro porous carbon, Ag particles (or porous carbon-Ag composite made of these materials), and a binder) are added to a polar or non-polar solvent to prepare a slurry (alternatively a paste). The obtained slurry is then applied to the prepared negative electrode current collector to form a negative electrode active material layer.

If the negative electrode active material layer further comprises one or more additional layers, the additional layers may be stacked in the same manner as above.

The laminate obtained by the above method is then pressurized, for example, using hydrostatic pressure, to produce a negative electrode. The pressurization process may be preferably omitted. Furthermore, the method of applying the slurry to the negative electrode current collector is not particularly limited and may include, for example, screen printing, metal mask printing, electrostatic painting, dip coating, spray coating, roll coating, doctor blade, gravure coating, and the like.

The method of forming a negative electrode active material layer in two layers was described above, but even if additional layers are to be formed, the negative electrode can be manufactured by preparing a slurry to form each layer and sequentially stacking each layer according to the stacking order in the method described above.

### (3) Solid electrolyte layer manufacturing process

The solid electrolyte layer may be fabricated by a solid electrolyte comprising, for example, a sulfide-based solid electrolyte material.

First, the starting material (e.g., Li₂S, P₂S₅, etc.) is processed by a melt quenching method or a mechanical milling method to obtain a sulfide-based solid electrolyte material. For example, when the melt quenching method is used, the starting materials are mixed in a predetermined amount, pelletized, reacted at a predetermined reaction temperature in a vacuum, and then quenched to produce a sulfide-based solid electrolyte material. Further, the reaction temperature of the mixture of Li₂S and P₂S₅ may be 400°C to 1000°C, such as 800°C to 900°C. Further, the reaction time may be 0.1 hour to 12 hours, such as 1 hour to 12 hours. Further, the quenching temperature of the reactants may be 10°C or less, such as 0°C or less, and the quenching rate may be typically 1°C/sec to 10000°C/sec, such as 1°C/sec to 1000°C/sec.

In addition, when the mechanical milling method is used, the sulfide-based solid electrolyte material can be prepared by stirring and reacting the starting material using a ball mill or the like. In addition, the stirring speed and stirring time of the mechanical milling method are not particularly limited, but the faster the stirring speed, the faster the sulfide-based solid electrolyte material can be produced, and the longer the stirring time, the higher the conversion rate of the raw material to the sulfide-based solid electrolyte material.

The obtained mixed raw material (sulfide-based solid electrolyte material) is then subjected to heat treatment at a predetermined temperature and crushed to produce a particle-shaped solid electrolyte. If the solid electrolyte has a glass transition point, it may be changed from amorphous to crystalline by heat treatment.

The solid electrolyte obtained by the above method can then be used to prepare a solid electrolyte layer by coating using a known coating method, for example, an aerosol positioning method, a cold spray method, a sputtering method, and the like. The solid electrolyte layer may also be prepared by pressurizing the solid electrolyte particles. The solid electrolyte layer can also be prepared by mixing the solid electrolyte with a solvent and a binder and applying dry pressurization to prepare the solid electrolyte layer.

### (4) Laminating process

An all-solid-state Lithium-ion secondary battery according to one embodiment can be obtained by disposing a solid electrolyte layer between a positive electrode and a negative electrode and pressurizing it using, for example, hydrostatic pressure.

The all-solid-state lithium-ion secondary battery of the present invention does not require high external pressure to be applied using an end plate, and can provide improved discharge capacity even if the external pressure applied to the positive electrode, negative electrode, and solid electrolyte layer is 1 MPa or less during use.

### <Charging method of all-solid-state lithium-ion secondary battery>

Next, a method of charging an all-solid-state lithium-ion secondary battery is provided as follows.

A method of charging an all-solid-state lithium-ion secondary battery, according to one embodiment, may comprise charging the all-solid-state lithium-ion secondary battery beyond the charging capacity of the negative electrode active material layer (i.e., overcharging).

In the early stage of charging, lithium may be absorbed into the negative electrode active layer. If the charge exceeds the charge capacity of the negative electrode active layer, lithium is precipitated on the back side of the negative electrode active layer, i.e., between the negative electrode current collector and the negative electrode active layer, and the lithium can form a metal layer that was not present at the time of manufacture. During discharge, the lithium in the negative electrode active material layer and the metal layer can be ionized and migrate to the positive electrode side. Therefore, lithium can be used as a negative electrode active material in the all-solid-state lithium-ion secondary battery of the present invention. Furthermore, since the negative electrode active material layer coats the metal layer, it can function as a protective layer for the metal layer and inhibit the precipitation and growth of dendritic metallic lithium. In this way, the short circuit and capacity degradation of the all-solid-state lithium-ion secondary battery can be suppressed, and the characteristics of the all-solid-state lithium-ion secondary battery can be improved. Furthermore, according to one embodiment, since the metal layer is not pre-formed, the manufacturing cost of the all-solid-state lithium-ion secondary battery can be reduced.

Further, the metal layer is not limited to being formed between the negative electrode current collector and the negative electrode active material layer, but may also be formed inside the negative electrode active material layer. Furthermore, the metal layer may be formed both between the negative electrode current collector and the negative electrode active material layer and on the interior of the negative electrode active material layer.

The all-solid-state lithium-ion secondary battery of the present invention can be fabricated as a unit cell with a structure of positive electrode/separator/negative electrode, a bicell with a structure of positive electrode/separator/negative electrode/separator/positive electrode, or a stacked cell in which the structure of the unit cell is repeated.

The shape of the all-solid-state lithium-ion secondary battery of the present invention is not particularly limited, and can be, for example, coin-shaped, button-shaped, sheet-shaped, stacked, cylindrical, flat, horn-shaped, etc. It can also be applied to large-scale batteries used in electric vehicles. For example, all-solid-state lithium-ion secondary batteries can be used in hybrid vehicles such as plug-in hybrid electric vehicles (PHEVs). They can also be used in applications that require large amounts of power storage. For example, they can be used in e-bikes or power tools.

### [Mode for Practicing the Invention]

Hereinafter, embodiments are provided in order to illustrate the present invention in detail. However, embodiments according to the present invention may be modified in many other ways, and the scope of the present invention should not be construed to be limited to the embodiments described below. The embodiments of the present invention are provided to more fully illustrate the present invention to one of ordinary skill in the art.

### Examples 1 to 3 and Comparative Examples 1 to 5: Manufacture of the negative electrode

The negative electrode active material slurry compositions were prepared using the carbon materials, Ag nanoparticles, and binders listed in Table 1 below.

Specifically, the mixture of the carbon material, Ag nanoparticles, and PVDF binder listed in Table 1 below was placed in a Thinky mixer container with NMP solvent and mixed at 2000 rpm to prepare a negative electrode active material slurry containing porous carbon-Ag composite.

The negative electrodes of Examples 1 to 3 and Comparative Examples 1 to 5 were prepared by coating each negative electrode active material slurry prepared by the above process with a thickness of 10 µm on SUS foil and drying the same.

**[Table 1]**

| | Carbon material particles | | | | | Ag particles | | Binders | |
|---|---|---|---|---|---|---|---|---|---|
| | Type | BET (m²/g) | Bulk Density (g/ml) | Particle size (D50/ µm) | Content (% by weight) | Particle size (D50/ nm) | Content (% by weight) | Type | Content (% by weight) |
| Example 1 | MPC | 554 | 0.19 | 1.1 | 80 | 50 | 10 | PVDF | 10 |
| Example 2 | MPC | 554 | 0.19 | 1.1 | 70 | 50 | 20 | PVDF | 10 |
| Example 3 | MPC | 554 | 0.19 | 1.1 | 60 | 50 | 30 | PVDF | 10 |
| Comparative Example 1 | MPC | 554 | 0.19 | 1.1 | 70 | 50 | 20 | PVDF | 10 |
| Comparative Example 2 | Activated carbon | 2205 | 0.18 | 5.6 | 80 | 50 | 10 | PVDF | 10 |
| Comparative Example 3 | Activated carbon | 2205 | 0.18 | 5.6 | 70 | 50 | 20 | PVDF | 10 |
| Comparative Example 4 | Carbon black | 63 | 0.09 | 0.2 | 70 | 50 | 20 | PVDF | 10 |
| Comparative Example 5 | MPC | 554 | 0.19 | 1.1 | 70 | 10 | 20 | PVDF | 10 |

### Experimental Example 1: Measurement of apparent density of a carbon-Ag composite

The bulk density of the porous carbon-Ag composites prepared in Example 2 and Comparative Example 5 above was measured by the JIS K 1469 method. Specifically, except that PVDF binder was not used, porous carbon-Ag composites were prepared and used for bulk density measurement using the same method as described in Example 2 and Comparative Example 5 above. That is, carbon material and Ag nanoparticles were placed in a Thinky mixer container with NMP solvent and mixed at 2000 rpm to prepare a slurry, and dried to prepare a powder phase carbon-Ag composite, and the bulk density was measured by the JIS K 1469 method.

From the above measurements, it was determined that the bulk density of the porous carbon-Ag composite prepared in Example 2 was 0.22 g/ml, and the apparent density of the porous carbon-Ag composite prepared in Comparative Example 5 was 0.32 g/ml.

From these results, it can be seen that for the porous carbon-Ag composite prepared in Comparative Example 5, many Ag particles were inserted into the internal pores of the macro porous carbon, resulting in an increased bulk density, while for the porous carbon-Ag composite prepared in Example 2, most of the Ag particles were located in the surface pores of the macro porous carbon, resulting in a relatively low density.

### Manufacture of the all-solid-state lithium-ion secondary batteries of Examples 4 to 6 and Comparative Examples 6 to 10

Li[Ni_{0.82}Co_{0.14}Mn_{0.04]}O₂, the positive electrode active material, as the positive electrode, Li₆PS₆Cl as the solid electrolyte, carbon nanofiber (VGCF, manufactured by Showa Denko) as the conductive material, and polytetrafluoroethylene as the binder were sequentially added to the container in a weight ratio of 77:20:1:2. After each addition of each composition, the positive electrode mixture was prepared by repeatedly mixing 10 times for 30 seconds at 10,000 rpm using a Lab Blender.

For the above mixture, high shear mixing was performed for 5 min by applying a shear force of 100 at 100°C using a Twin Screw Kneader (manufactured by LG Electronics), and the positive electrode mixture was prepared.

A 200 µm thick freestanding film was prepared using the positive electrode mixture at 100°C using a two roll mil apparatus (manufactured by Inoue). The positive electrode was then prepared by placing the film on one side of a primer-coated aluminum current collector (thickness µm) and bonding the film to the current collector using a lamination roll maintained at 120°C.

The negative electrodes prepared in Examples 1 to 3 and Comparative Examples 1 to 5 were used as negative electrodes, and the liquid electrolyte of ethylene carbonate (EC)/ethyl methyl carbonate (EMC) (having a volume ratio of 1:2) with 1 mole of lithium hexafluorophosphate (LiPF6) was used for the battery of Comparative Example 1, and a sulfide-based all-solid-state electrolyte (Li₆PS₆Cl) was used for the remaining batteries to produce the pouch-type monocells of Examples 4 to 6 and Comparative Examples 6 to 10.

The sulfide-based all-solid-state electrolyte was prepared by mixing Li₆PS₆Cl solid electrolyte and nitrile butadiene rubber (NBR) in xylene as a solvent, and then mixing it with zirconia balls 10 times for 1 minute at 2,000 rpm in a Thinky Mixer to prepare a solid electrolyte slurry, coating it on a PET film as a release paper, and drying it in a vacuum oven at 45°C for 6 hours to form a film. The weight ratio of Li₆PS₆Cl and NBR was 95:5, and the film thickness was 100 µm.

The assembly was prepared by placing a solid electrolyte between the negative electrode and positive electrode, and then the assembly was placed in a pouch and sealed. The pouch was then fixed on an Al plate and pressurized with an isostatic pressurizer at 500 MPa for 30 minutes to produce an all-solid-state lithium secondary battery.

### Experimental Example 2: Evaluation of battery characteristics

The pouch-type monocells of Examples 4 to 6 and Comparative Examples 6 to 10 were operated under the following charge/discharge conditions at an operating voltage of 4.25 V-3.0 V and an operating temperature of 60°C to evaluate their initial charge/discharge efficiency and cycle characteristics, and the results are shown in Table 2 below.

For reference, a monocell was prepared by mounting each of the batteries of Examples and Comparative Examples on a pressurized jig and tightening the bolts/nuts located at the square corners with the same pressure of 1N. m.
(1) The initial charge/discharge efficiency (%) was evaluated as the ratio of the charge capacity to the discharge capacity when the battery was charged once and discharged once at 60°C under the following conditions.
   Charging conditions: 0.1C CC charge to 4.25V, then CV charge to 4.25V, 0.05C cut-off
   Discharge conditions: 0.1C CC discharge to 3.0V
(2) Cycle characteristics were evaluated as the ratio of the capacity of a single discharge to the capacity of 50 discharges when repeatedly charging and discharging 50 times under the following conditions at 60°C.
   Charging conditions: 0.5C, 4.25V CC/CV, 0.1C cut-off
   Discharge conditions: 0.5C, 3.0V, CC

**[Table 2]**

| | Used carbon material particles | | | | | Used Ag particles | | Battery Performance | |
|---|---|---|---|---|---|---|---|---|---|
| | Type | BET (m²/g) | Bulk density (g/ml) | Particle size (D50/ µm) | Content (% by weight) | Particle size (D50/ nm) | Content (% by weight) | Initial charge/Di scharge efficiency (%) | 0.5C/0.5 C (Capa. Efficiency , %@50^{th} cycle) |
| Example 4 | MPC | 554 | 0.19 | 1.1 | 80 | 50 | 10 | 97.9 | 98.8 |
| Example 5 | MPC | 554 | 0.19 | 1.1 | 70 | 50 | 20 | 98.2 | 98.3 |
| Example 6 | MPC | 554 | 0.19 | 1.1 | 60 | 50 | 30 | 98.6 | 97.5 |
| Comparative Example 6 | MPC | 554 | 0.19 | 1.1 | 70 | 50 | 20 | 96.3 | 77.2 |
| Comparative Example 7 | Activated carbon | 2205 | 0.18 | 5.6 | 80 | 50 | 10 | 96.1 | 96.1 |
| Comparative Example 8 | Activated carbon | 2205 | 0.18 | 5.6 | 70 | 50 | 20 | 96.5 | 95.7 |
| Comparative Example 9 | Carbon black | 63 | 0.09 | 0.2 | 70 | 50 | 20 | 78.6 | 87.3 |
| Comparative Example 10 | MPC | 554 | 0.19 | 1.1 | 70 | 10 | 20 | 95.9 | 93.4 |

## Claims

1. A porous carbon-Ag composite comprising macro porous carbon particles and Ag particles inserted into the pores of the carbon.

2. The porous carbon-Ag composite according to claim 1, wherein the macro porous carbon particles comprise pores having a size of 60 nm to 0.5 µm on their surface, wherein the Ag particles have a particle size (D50) of 20 nm to 100 nm.

3. The porous carbon-Ag composite according to claim 2, wherein the macro porous carbon particle size (D50) is 0.5 µm to 10 µm.

4. The porous carbon-Ag composite according to claim 3, wherein the BET specific surface area of the macro porous carbon particles is 300 to 1000 m²/g.

5. The porous carbon-Ag composite according to claim 3, wherein the macro porous carbon particles have a bulk density of 0.1 g/ml to 1 g/ml.

6. The porous carbon-Ag composite according to claim 1, wherein the porous carbon-Ag composite comprises 70 to 90 parts by weight of macro porous carbon particles and 10 to 30 parts by weight of Ag particles, based on the total weight of the composite.

7. A negative electrode comprising a current collector and a negative electrode active material layer, wherein the negative electrode active material layer comprises the porous carbon-Ag composite according to claim 1.

8. The negative electrode according to claim 7, wherein the negative electrode active material layer comprises 80 to 99% by weight of the porous carbon-Ag composite and 1 to 20% by weight of a binder, based on the total weight of the layer.

9. A lithium-ion secondary battery comprising a positive electrode, the negative electrode of claim 7, and a solid electrolyte disposed between the positive electrode and negative electrode.

10. The lithium-ion secondary battery according to claim 9, wherein the solid electrolyte comprises a sulfide-based solid electrolyte.

11. The lithium-ion secondary battery according to claim 10, wherein the lithium-ion secondary battery is an anodeless battery.
